# EUROPEAN PATENT SPECIFICATION

(11) **EP 1 673 493 B1**
(45) Date of publication and mention of the grant of the patent: **08.07.2009**
(21) Application number: 04762308.7
(22) Date of filing: 08.09.2004
(51) Int. Cl.: D01D 5/00

(54) **A METHOD OF NANOFIBRES PRODUCTION FROM A POLYMER SOLUTION USING ELECTROSTATIC SPINNING AND A DEVICE FOR CARRYING OUT THE METHOD**
VERFAHREN ZUR NANOFASERHERSTELLUNG AUS EINER POLYMERLÖSUNG DURCH ELEKTROSTATISCHES SPINNEN UND VORRICHTUNG ZUR DURCHFÜHRUNG DES VERFAHRENS
PROCEDE DE PRODUCTION DE NANOFIBRES PAR FILAGE ELECTROSTATIQUE A PARTIR D'UNE SOLUTION POLYMERE ET DISPOSITIF ASSOCIE

(30) Priority: 08.09.2003 CZ 20032421
(43) Date of publication of application: 28.06.2006
(73) Proprietor: Technicka Univerzita v Liberci, 461 17 Liberec (CZ)
(72) Inventor: JIRSAK, Oldrich, 460 10 Liberec 20 (CZ); SANETRNIK, Filip, 460 14 Liberec 14 (CZ); LUKAS, David, 460 06 Liberec 6 (CZ); KOTEK, Vaclav, 460 05 Liberec 5 (CZ); MARTINOVA, Lenka, 460 01 Liberec 15 (CZ); CHALOUPEK, Jiri, 400 11 Usti nad Labem (CZ)
(74) Representative: Musil, Dobroslav
(86) International application number: PCT/CZ2004/000056
(87) International publication number: WO 2005/024101

(56) References cited:
- EP-A2- 1 059 106
- WO-A1-03/016601
- GB-A- 1 346 231

## Description

### Technical field

The invention relates to a method of nanofibres production from a polymer solution using electrostatic spinning in an electric field created by a potential difference between a rotating charged electrode and a counter electrode, in which is the polymer solution for spinning supplied into the electric field by means of the surface of a rotating charged electrode which is by a part of its surface immersed in a polymer solution, while created nanofibres are by action of electric field drift away from rotating charged electrode towards the counter electrode and then the nanofibres are stored on a device for nanofibres storage.

Further the invention relates to a device for nanofibres production from a polymer solution using electrostatic spinning in an electric field created by a potential difference between a rotating charged electrode and a counter electrode, in which is the polymer solution for spinning supplied into the electric field by means of the surface of a rotating charged electrode which is by a part of its surface immersed in a polymer solution, while created nanofibres are by action of electric field drift away from rotating charged electrode towards the counter electrode and then the nanofibres are stored on a device for nanofibres storage.

### Background art

Polymer fibres with diameters between 10 nm to 1.000 nm represent a new grade of materials with some properties of extreme values. Such a typical field of use of polymer fibres layers is a filtration of gases and liquids, barrier materials for entrapment of submicron particles, bacteria and chemicals, where there is a very high filtering efficiency reached. Nanofibres are used as battery separators, composite reinforcement and as pharmaceutical carriers and tissue implants carriers in medicine. A high specific surface of nanofibres easily accessible to gaseous and liquid media predetermines for their special sorptive properties and for their use as carriers of different active ingredients, e.g. catalysators. Extremely small pores in layers of nanofibres are a condition for extreme thermal insulating properties.

Nanofibres are made of a broad range of polymers, polymer blends and from blends of polymers with low molecular additives by processes of polymer solutions forming. Unlike in on principle similar processes of polymer melts forming is in solutions processing reached smaller diameters of fibres due to lower solutions viscosities. For solutions forming is used mechanical forces of flowing gaseous medium or coulombic forces in electrostatic field. Electrostatic spinning leads to fibres of lower diameters because single forming fibres are owing to distribution of equivalent charge in their volume split in a number of filaments.

Up to the day known methods and devices for production of nanofibres by polymer solutions forming by an air stream are described for example in US 6.382.526 and US 6.520.425. Polymer solutions are injected into a spinning jet of an annular section. The solutions are then formed by a mechanical action of an air stream delivered inside of the annulus, or as the case may be outside of this annulus, to produce fibres of diameters of 200 nm to 3.000 nm.

Forming of polymer solutions using electrostatic field of mean intensity 50.000 V/m to 500.000 elm is described in patent applications WO 0.127.365, WO 0.250.346, US 2002/0.175.449 A1 and US 2002/084.178 A1. According to these solutions is the polymer solution distributed into cylindrical spinning jets with inside diameter 0,5 mm to 1,5 mm. These jets are connected to a source of DC voltage. The effluent solvent is by the electrostatic force attracted to the counter electrode, which is usually grounded and at the same time it is by this force formed into fine filaments, which are consequently split in a filament bundle of corresponding smaller diameter. Spinning is performed from one jet or an array of static or moving jets with aim to increase the capacity of the device, even coverage of counter electrode or plane supporting material moving on a surface of counter electrode or in the vicinity of its surface.

The drawback of all above mentioned methods and devices for nanofibres production is a very small amount of processed polymer material in time. In the case of nanofibres forming by mechanical forces the diameter of produced nanofibres depends among others on a ratio of air mass and polymer solution flowing through the spinning jet. While forming by coulombic force in electrostatic field, there must be formed so called Taylor cone at the throat of the spinning jet, whose existence is a requirement for fibres formation and it is conditioned by a relatively narrow range of ratio of discharge velocity of the polymer solvent from the spinning jet to the intensity of electrostatic field. The maximum adjustable intensity of electrostatic field is limited by dielectric strength of air and above this limit discharges between electrodes happen. In consequence of above mentioned circumstances and attainable concentrations of spinning polymer solutions it is possible to process approximately 0,1 g to 1 g of polymer in an hour in one spinning jet, which from the industrial point of view makes the production of nanofibres very problematic.

From GB 1346231 is also known a filter produced by electrostatic spraying. The material to be sprayed is moved to the electrostatic field by a conveyor made as rotating annular electrode. Created nanofibers are deposited on two moving belts which are parallel to the rotating electrode. Due to continuous creation of nanofibers the concentration of polymer solution on the electrode changes and subsequently lower and lower amount of nanofibers is created. The final layer of nanofibers will be therefore non-uniform in regard to its quality and density. From EP 1059106 is known a device and method for producing a fine fiber structure. Liquefied polymer is curved by a system of nobles or by wetting sharp protrusion of annular rotating electrode, but both this possibilities embody above mentioned drawbacks and none of them is capable of creation of uniform planar textile composed of nanofibers.

Besides is describes WO 03/016601 device for production of fibers by electrostatic spinning, by which is the polymer solution or melt brought to the planar spinning electrode by a rotating conveyor. After the polymer solution or melt reaches the edge of the plannar spinning electrode, it is spinned, and created nanofibers are deposited on collecting electrode. Disadvantages of this device rest namely in the fact, that polymer solution or melt will due to its large surface on the spinning electrode solidify and by contrast the overflowing polymer solution or melt will drop to the electric field where it could be spinned in a uncontrollable manner. This device is not applicable in an industrial scale because is not able of continuous electrospinning for period longer than few minutes.

The aim of the invention is to create a method and a device industrially applicable and able to reach a high spinning capacity.

### Principle of the invention

The aim of the invention has been reached by a method according to claim 1 and by the device according to claim 7.

Advantageous features of the method and device are in dependent claims.

Features of preamble of claims 1 and 7 are known from GB 1 346 231, which is considered to be the closest prior art.

### Description of the drawing

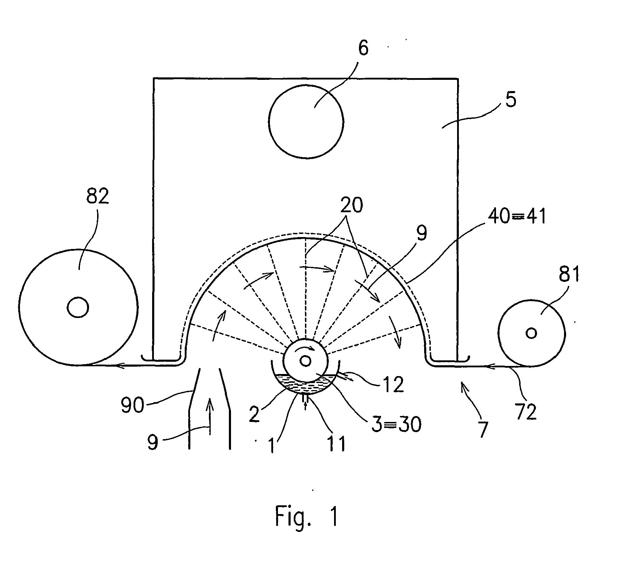

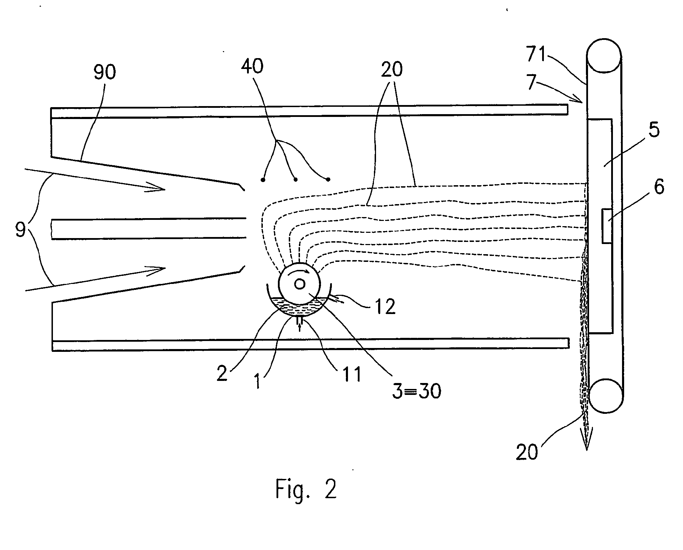

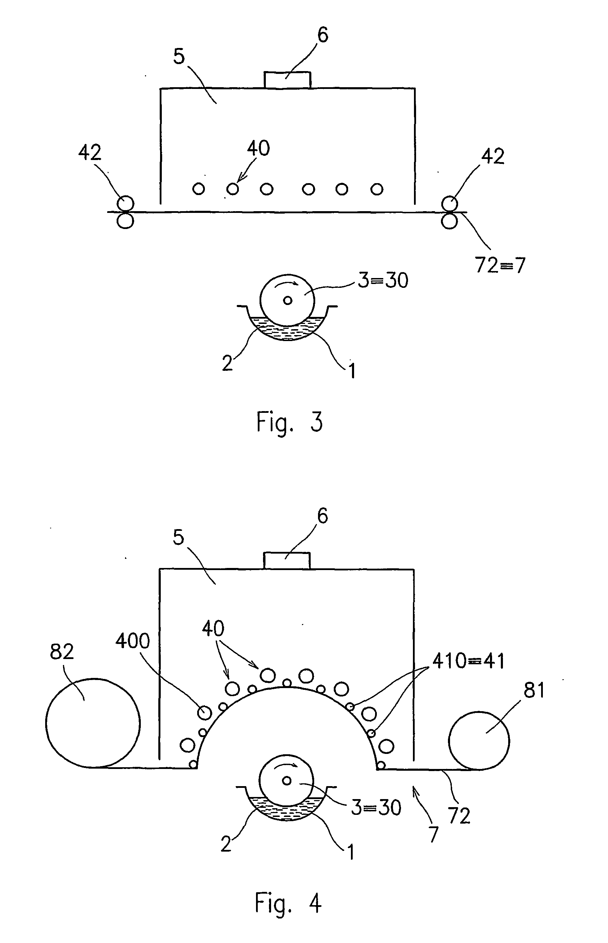

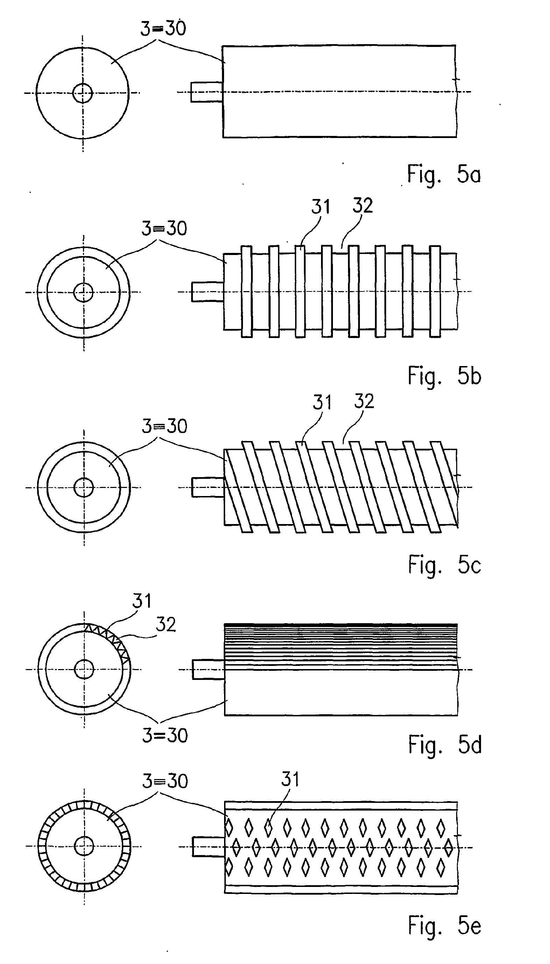

Examples of a device embodiment according to the invention are schematically shown in the enclosed drawings where Fig. 1 is a cross section of a device with a counter electrode surrounding a part of the circumference of a charged electrode, Fig. 2 is a cross section of an embodiment of the device with a means for nanofibres storage outside of the space between the electrodes, Fig. 3 is a cross section of the device, where the means for nanofibres storage is formed by a plane supporting material positioned between the electrodes in the conveyance composed of stretching elements, Fig. 4 is an embodiment similar as Fig. 1 with a fixed electrode composed of longitudinal rods and the conveyance of plane supporting material of nanofibres arranged between these rods, Fig. 5a to 5e is a view at various embodiments of the surface of a cylinder presenting charged electrode from the front and from the side.

### Specific description

A device for nanofibres production from a polymer solution using electrostatic spinning in an electric field created by a potential difference between a charged electrode and a counter electrode consisting of a container 1 at least partly filled with a polymer solution 2 in which is by a part of its circumference immersed pivoted cylinder 3, which is by a well-known not represented method connected to a source of DC voltage and which forms a charged electrode **30.** Against a free part of the circumference of the charged electrode **30** is a counter electrode **40** with a different potential situated, which is usually connected to earth (grounded), as described in Fig. 1, or it is by a well-known not represented method connected to a source of DC voltage of a different polarity.

In the not represented embodiments is the cylinder **3** immersed in the polymer solution **2** by the bottom part of its circumference. Such arrangement can be changed according to the not represented example, where with polymer solution is filled a closed container, from which is on surface of the charged electrode distributed the polymer solution or the cylinder presenting the charged electrode is in such closed container positioned, while the polymer solution is wetting for example the top part of the circumference of the cylinder, which draws on its circumference appropriate amount of the polymer solution from the container.

In the example of embodiment shown in Fig. 1 is the counter electrode **40** made of a perforated conducing material, e.g. sheet metal, shaped in a cylindrical surface, which forms the front end of a vacuum chamber **5,** which is connected to a vacuum source **6.** A part of the surface of the counter electrode **40** near the charged electrode **30** serves as a conveyance **41** for plane supporting material **72** of the nanofibres pervious to air, which is for example made of a backing fabric and which is positioned on an unreeling device **81** arranged on one side of the vacuum chamber **5** and on the reeling device **82,** which is arranged on the other side of the vacuum chamber **5.** In this represented embodiment the plane supporting material **72** of the nanofibres forms in itself a means **7** for nanofibres storage pervious to air.

The polymer solution **2** container **1** is open and fitted with at least one polymer solution **2** inlet **11** and at least one polymer solution **2** outlet **12.** The mentioned polymer solution inlet **11** and outlet **12** serves to provide circulation of the polymer solution **2** and to maintain the constant height of its level in the container **1.**

To the space between the charged electrode **30** and the counter electrode **40** is an auxiliary drying air **9** supply assigned, which can be according to the well-known manner heated up as needed, for example using a heating device arranged in the auxiliary drying air **9** supply. The auxiliary drying air **9** is from the space between the charged electrode **30** and the counter electrode **40** either completely or partly sucked into the vacuum chamber **5** or it comes out on the other side than it is supplied.

By rotating the charged electrode **30,** where its part of its circumference is immersed in the polymer solution **2,** is the polymer solution **2** drawn by the circumference of the charged electrode **30** from the container **1** into the space between the charged electrode **30** and the counter electrode **40,** where an electric field is formed. Here on the surface of the charged electrode **30** are from the polymer solution **2** formed Taylor cones of a high stability and they present places of primary formation of the nanofibres **20.** The formed nanofibres **20** are by the effects of electric field drift away to the counter electrode **40** and consequently they are deposited on the surface of the backing fabric presenting plane supporting material **72** of the nanofibres into a layer, which thickness is controlled using the velocity of the unreeling device **81** and the reeling device **82.**

The drift of the nanofibres **20** away of the charged electrode **30** to the counter electrode **40** is promoted by streaming of air sucked from the outer space into the vacuum chamber **5** and passing along the polymer solution **2** container **1** and the charged electrode **30** and passing through the backing fabric presenting plane supporting material 72 of the nanofibres and the counter electrode **40.**

In the embodiment shown in Fig. 4 is the counter electrode **40** manufactured using another appropriate method, for example from rods **400** parallel to the pivoted cylinder **3** presenting the charged electrode **30.** Between the rods **400** forming the counter electrode **40** there are arranged auxiliary rods **410** forming conveyance **41** for plane supporting material **72** of the nanofibres that forms the means **7** for nanofibres storage. Nevertheless, some or all of the auxiliary rods **410** can be rotable to lower friction drag while conveying the supporting material **72** of the nanofibres. The conveyance for the supporting material **72** of the nanofibres can be in this embodiment composed also of rods **400** forming counter electrode **40.** In the described device the nanofibres **20** are produced in a high number so the limiting factor of the spinning device capacity is the evaporation rate of the polymer solvent from produced nanofibres **20** and the rate of drawing off of the evaporated solvent, which would in a short period create a saturated vapour state not permitting another solvent evaporation in the space between the charged electrode **30** and the counter electrode **40.** The device is therefore fitted with the auxiliary drying air **9** supply, which provides drawing off of the solvent vapours especially from the space between the charged electrode **30** and the counter electrode **40.** To increase the effect this auxiliary drying air **9** can be heated up.

The next example according to the invention is described in Fig. 2, where as well as in the embodiment according to the Fig. 1 the charged electrode **30** is pivoted and by a part of its circumference it is positioned in the polymer solution 2, which is in the container **1** and its circulation and the level in the container 1 is maintained by flowing of the polymer solution **2** through the inlet **11** and the outlet **12.** Against the free part of the circumference of the pivoted charged electrode **30,** there is the counter electrode **40** positioned composed of a system of wires or rods connected to earth (grounded) or by a well-known not represented manner connected to a source of DC voltage of opposite polarity than the charged electrode **30.** Outside of the space between the electrodes (30, 40), where the electrostatic field is created and where by electrostatic spinning the nanofibres **20** from the polymer solution **2** are produced, there is positioned a conveyor **71** of nanofibres pervious to air, which form the device **7** for nanofibres storage behind which is arranged the vacuum chamber **5** connected to the vacuum source **6.**

The nanofibres **20** directing due to the action of electric field from the charged electrode **30** to the counter electrode **40** are by the action of air stream sucked into the vacuum chamber **5** deflected from their course and are drift onto the conveyor **71** pervious to air, onto which surface they are stored in a layer, which is by the motion of the conveyor **71** carried out of the device and consequently by an appropriate not represented manner processed, conditioned or stored. For the aim to increase the amount of air in the space between the electrodes **30, 40** is the device fitted with the inlet **90** of auxiliary drying air **9,** which enters the device casing in the direction to the conveyor **71** pervious to air, which further promotes deflecting the nanofibres **20** from the course to the counter electrode **40** to the direction to the conveyor **71** pervious to air.

Also in this embodiment there is a possibility of various modifications in arrangement and shape of the counter electrodes. There is also possibility to insert in front of the conveyor **71** pervious to air a backing fabric or another plane supporting material **72** and the layer of the nanofibres **20** can be stored onto this plane supporting material **72.**

In the Fig. 3 is described an embodiment of the device consisting of pivoted charged electrode **30** immersed by bottom part of its circumference into the polymer solution **2.** Against the free part of the circumference of the pivoted charged electrode **30,** there is positioned the counter electrode **40** composed of a system of rods parallel to the axis of rotation of the charged electrode **30** and through the space between the electrodes **30, 40** is conveyed the plane supporting material **72** of the nanofibres using conveyance **41** composed of stretching elements **42.**

The charged electrode **30** is composed of a body able to rotate, for example a cylinder, quadrangular or multiangular prism and the like, while it is advantageous if the axis of rotation is at the same time the axis of symmetry of the used body. The cylinder **3** is on the circumference fitted with lugs **31** and/or recesses **32.** Examples of shapes of the cylinder surface appropriate for the charged electrode are described in the Fig. 5a to 5e, while these shapes do not limit all possible embodiments but serve only as an example. In up to now described embodiments, there is created a steady electric field between the electrodes. The device is possible to be fit with means for creating an intermittent electric field if it is necessary for creating or storage of the nanofibres **20** layer.

Specific examples are described below.

### Example of embodiment 1

The polymer solution **2** container **1** of the device according to the Fig. 1 is being filled with 12% aqueous polyvinyl alcohol solution with 88 % degree of hydrolysis of a molecular weight M_{w} = 85.000, containing 5 mole per cent citric acid as a crosslinking agent referred to structural units of the polymer. The viscosity of the solution is 230 mPa.s at 20 °C, specific electric conductivity 31 mS/cm and surface tension 38 mN/m. The polymer solution 2 flows into the container **1** through an inlet **11** and flows off through an outlet **12** while the level height of the polymer solution **2** in the container **1** is maintained using the position of the outlet **12.** The charged electrode **30** consists of a **cylinder** **3** of 30 mm in diameter in the embodiment according to the Fig. 5c and it is rotating clockwise in 2,5 RPM. The cylinder **3** is connected to +40 kV DC voltage source. The device is manufactured according the Fig. 1 and throughout it is led a backing fabric forming a plane supporting material **72** of the nanofibres. Owing to the low pressure in the low pressure chamber **6** behind the counter electrode **40** pervious to air, the plane material abuts to the counter electrode **40,** which forms this way the plane material conveyance. The surface of the rotating cylinder **3** draws the polymer solution **2** out of the container **1** and owing to the electric field between the electrodes **30, 40** it forms Taylor cones and the nanofibres **2** in diameters 50 to 200 nanometers. The nanofibres **20** are drift away to the counter electrode **40** and they are stored on the running backing fabric, where they form a layer of thickness that can be controlled by the movement speed of the backing fabric. Into the space between the electrodes is an auxiliary drying air **9** of the temperature of 50°C supplied. The layer of nanofibres is produced in the amount of 1,5 g/min for one meter length of rotating cylinder **3.**

### Example of embodiment 2

The polymer solution **2** container **1** of the device according to the Fig. 2 is being filled with 10% aqueous polyvinyl alcohol solution with 98 % degree of hydrolysis of a molecular weight M_{w} = 120.000, containing 5 mole per cent citric acid as a crosslinking agent referred to structural units of the polymer. The viscosity of the solution is 260 mPa.s at 20 °C, its specific electric conductivity has been adjusted by an addition of a small amount of aqueous NaCl solution to 25 mS/cm and the surface tension has been adjusted by addition of 0,25 % nonionogene surface active agent to 36 mN/m. The polymer solution **2** flows into the container **1** through an inlet **11** and flows off through an outlet **12,** where its position determines the level height of the polymer solution **2** in the container **1.** The cylinder **3** presenting the charged electrode is 50 mm in diameter and has a smooth surface described in the Fig. 5a. The cylinder **3** is connected to +40 kV DC voltage source and the wire counter electrode **40** to negative 5 kV DC voltage source. In the space between the charged electrode **30** and the counter electrode **40** are produced nanofibres **20** in a diameter of 50 to 200 nanometers, which are by the air sucked from the space between the electrodes **30, 40** into the vacuum chamber **5** and using the auxiliary drying air **9** drift to the surface of the conveyor **71** pervious to air, where they are stored in a fibre layer in the amount of 1,8 g/min for one meter length of rotating cylinder.

### Industrial applicability

A method and a device according to the invention are applicable for production of layers of nanofibres in diameters from 50 to 200 nanometers. These layers can be used for filtration, as battery separators, for production of special composites, for construction of sensors with extremely low time constant, for production of protective clothes, in medicine and other fields.

## Claims

1. A method of nanofibres production from a polymer solution (2) using electrostatic spinning in an electric field created by a potential difference between a rotating charged electrode (30) and a counter electrode (40), in which is the polymer solution (2) for spinning supplied into the electric field by means of the surface of a rotating charged electrode (30) which is by a part of its surface immersed in a polymer solution (2), while created nanofibres (20) are by action of electric field drift away from rotating charged electrode (30) towards the counter electrode (40) and then the nanofibres (20) are stored on a device (7) for nanofibres (20) storage **characterized by** that the nanofibres (20) are created from the surface of cylinder or quadrangular or multiangular prism charged electrode (30), while the counter electrode (40) is positioned against the free part of the circumference of the charged electrode (30) and the air between charged electrode (30) and the counter electrode (40) is sucked off.

2. A method as claimed in Claim 1, **characterized by** that the nanofibres (20) are by the air suction off deflected from their course towards the counter electrode (40) and are led to the device (7) for nanofibres (20) storage.

3. A method as claimed in any of Claims 1 or 2, **characterized by** that into the space between the electrodes (30, 40) is supplied an auxiliary drying air (9).

4. A method as claimed in Claim 3, **characterized by** that at least a part of the auxiliary drying air (9) is drawn off the space in front of the device (7) for nanofibres (20) storage, without passing through this device (7).

5. A method as claimed in any of Claims 3 or 4, **characterized by** that the auxiliary drying air (9) is heated up before entering the space between electrodes (30, 40).

6. A method as claimed in any of Claims 1 to 5, **characterized by** that the polymer solution (2) is composed of a water solution.

7. Device for nanofibres production from a polymer solution (2) using electrostatic spinning in an electric field created by a potential difference between a rotating charged electrode (30) and a counter electrode (40), in which is the polymer solution (2) for spinning supplied into the electric field by means of the surface of a rotating charged electrode (30) which is by a part of its surface immersed in a polymer solution (2), while created nanofibres (20) are by action of electric field drift away from rotating charged electrode (30) towards the counter electrode (40) and then the nanofibres (20) are stored on a device (7) for nanofibres (20) storage **characterized by** that the charged electrode (30) is a cylinder or quadrangular or multiangular prism and against the free part of the circumference of the charged electrode (30), there is the counter electrode (40) positioned.

8. Device as claimed in Claim 7, **characterized by** that the counter electrode (40) surrounds the free parts of the circumference of the charged electrode (30) along its entire length.

9. A device as claimed in Claim 7 or 8, **characterized by** that between both electrodes (30, 40) is situated the device (7) for nanofibres storage.

10. A device as claimed in Claim 9, **characterized by** that the device (7) for nanofibres storage is pervious to air, while the space behind this device (7) in regard to the charged electrode (30) is connected to the vacuum source (6).

11. A device as claimed in Claim 7, **characterized by** that outside of the space between the electrodes (30, 40) there is positioned the device (7) for nanofibres storage pervious to air, while the space behind this device (7) in regard to the charged electrode (30) is connected to the vacuum source (6) serving to create an air stream directing towards this device (7).

12. A device as claimed in any of Claims 7 to 11, **characterized by** that the device (7) for nanofibres storage is composed of a conveyor (71) pervious to air.

13. A device as claimed in any of Claims 7 to 11, **characterized by** that the device (7) for nanofibres storage is composed of a plane supporting material of the nanofibres (72).

14. A device as claimed in any of Claims 7 to 13, **characterized by** that into the space between the electrodes (30, 40) leads an inlet (90) of auxiliary drying air (9).

15. A device as claimed in Claim 14, **characterized by** that in the inlet (90) of auxiliary drying air (9), there is positioned an air heating device.

16. A device as claimed in Claim 13 or 15, **characterized by** that at least a part of air is drawn off the space in front of the device (7) for nanofibres storage in regard of the charged electrode (30), without passing through this device (7).

## Patentansprüche

1. Verfahren zur Herstellung der Nanofasern aus einer polymeren Lösung (2) durch elektrostatisches Verspinnen in dem elektrischen Feld, das durch den Unterschied der Potentiale zwischen der sich drehenden geladenen Elektrode (30) und der Gegenelektrode (40) gebildet wird, bei dem die polymere Lösung (2) zum Verspinnen in das elektrische Feld zum Verspinnen mit Hilfe der Oberfläche der sich drehenden geladenen Elektrode (30) zugeführt wird, die mit einem Teil ihrer Oberfläche in die polymere Lösung (2) eingetaucht ist, wobei die zu bildenden Nanofasern (20) durch die Wirkung des elektrischen Feldes von der sich drehenden geladenen Elektrode (30) zu der Gegenelektrode (40) mitgenommen werden und die Nanofasern (20) dann auf das Mittel (7) zur Lagerung der Nanofasern (20) gelagert werden, **dadurch gekennzeichnet, dass** die Nanofasern (20) von der Oberfläche einer Zylinderelektrode oder einer vierseitigen prismatischen oder einer mehrseitigen prismatischen geladenen Elektrode (30) gebildet werden, wobei die Gegenelektrode (40) gegen den freien Teil des Umfangs der geladenen Elektrode (30) platziert ist und die Luft zwischen der geladenen Elektrode (30) und der Gegenelektrode (40) abgesaugt wird.

2. Verfahren nach dem Anspruch 1, **dadurch gekennzeichnet, dass** die Nanofasern (20) durch die Absaugung der Luft von ihrer Richtung in der Richtung zu der Gegenelektrode (40) abgeschwenkt werden und zu dem Mittel (7) zur Lagerung der Nanofasern (20) geführt werden.

3. Verfahren nach einem der Ansprüche 1 oder 2, **dadurch gekennzeichnet, dass** in den Raum zwischen den Elektroden (30, 40) eine Hilfstrocknungsluft (9) zugeführt wird.

4. Verfahren nach dem Anspruch 3, **dadurch gekennzeichnet, dass** mindestens ein Teil der Hilfstrocknungsluft (9) aus dem Raum vor dem Mittel (7) zur Lagerung der Nanofasern (20) ohne den Durchgang durch dieses Mittel (7) abgeführt wird.

5. Verfahren nach einem der Ansprüche 3 oder 4, **dadurch gekennzeichnet, dass** die Hilfstrocknungsluft (9) vor dem Eingang in den Raum zwischen den Elektroden (30, 40) erwärmt wird.

6. Verfahren nach einem der Ansprüche 1 bis 6, **dadurch gekennzeichnet, dass** die polymere Lösung (2) durch eine wässrige Lösung gebildet wird.

7. Vorrichtung zur Herstellung der Nanofasern aus einer polymeren Lösung (2) mit Hilfe des elektrostatischen Verspinnens in dem elektrischen Feld, das durch den Unterschied der Potentiale zwischen der sich drehenden geladenen Elektrode (30) und der Gegenelektrode (40) gebildet wird, in der die polymere Lösung (2) zum Verspinnen in das elektrische Feld mit Hilfe der Oberfläche der sich drehenden geladenen Elektrode (30) zugeführt wird, die mit einem Teil ihrer Oberfläche in die polymere Lösung (2) eingetaucht wird, wobei die zu bildenden Nanofasern (20) durch die Wirkung des elektrischen Feldes von der sich drehenden geladenen Elektrode (30) zu der Gegenelektrode (40) mitgenommen werden und dann die Nanofasern auf das Mittel (7) zur Lagerung der Nanofasern (20) gelagert werden, **dadurch gekennzeichnet, dass** die geladene Elektrode (30) ein Zylinder oder ein vierseitiges Prisma oder ein mehrseitiges Prisma ist und gegen den freien Teil des Umfangs der geladenen Elektrode (30) die Gegenelektrode (40) platziert ist.

8. Vorrichtung nach dem Anspruch 7, **dadurch gekennzeichnet, dass** die Gegenelektrode (40) den freien Teil des Umfangs der geladenen Elektrode (30) auf ihrer ganzen Länge umschließt.

9. Vorrichtung nach dem Anspruch 7 oder 8 **dadurch gekennzeichnet, dass** zwischen beiden Elektroden (30, 40) ein Mittel (7) zur Lagerung der Nanofasern situiert ist.

10. Vorrichtung nach dem Anspruch 9, **dadurch gekennzeichnet, dass** das Mittel (7) zur Lagerung der Nanofasern luftdurchlässig ist, wobei der Raum hinter diesem Mittel (7) in Bezug auf die geladene Elektrode (30) mit einer Unterdruckquelle (6) verbunden ist.

11. Vorrichtung nach dem Anspruch 7, **dadurch gekennzeichnet, dass** außerhalb des Raumes zwischen den Elektroden (30, 40) ein luftdurchlässiges Mittel (7) zur Lagerung der Nanofasern platziert ist, wobei der Raum hinter diesem Mittel (7) in Bezug auf die geladene Elektrode (30) mit einer Unterdruckquelle (6) verbunden ist, die der Bildung des Luftstromes dient, der zu diesem Mittel (7) zielt.

12. Vorrichtung nach einem der Ansprüche 7 bis 11, **dadurch gekennzeichnet, dass** das Mittel (7) zur Lagerung der Nanofasern durch einen luftdurchlässigen Förderer (71) gebildet wird.

13. Vorrichtung nach einem der Ansprüche 7 bis 11, **dadurch gekennzeichnet, dass** das Mittel (7) zur Lagerung der Nanofasern durch ein flächiges tragfähiges Nanofasermaterial (72) gebildet wird.

14. Vorrichtung nach einem der Ansprüche 7 bis 13, **dadurch gekennzeichnet, dass** in den Raum zwischen den Elektroden (30, 40) eine Zuführung (90) der Hilfstrocknungsluft (9) eingemündet ist.

15. Vorrichtung nach dem Anspruch 14, **dadurch gekennzeichnet, dass** in der Zuführung (90) der Hilfstrocknungsluft (9) eine Lufterwärmungseinrichtung platziert ist.

16. Vorrichtung nach dem Anspruch 13 oder 15, **dadurch gekennzeichnet, dass** mindestens ein Teil der Luft aus dem Raum vor dem Mittel (7) zur Lagerung der Nanofasern in Bezug auf die geladene Elektrode (30) ohne den Durchgang durch dieses Mittel (7) abgeführt wird.

## Revendications

1. Procédé de la production des nanofibres de la solution des polymères (2) à l'aide du filage électrostatique dans le champ électrique formé par la différence des potenciels entre l'électrode chargée tournante (30) et la contre-électrode (40), procédé selon lequel la solution des polymères (2) pour le filage est amenée dans le champ électrique pour le filage à l'aide de la surface de l'électrode chargée tournante (30) qui est par une partie de sa surface plongée dans la solution des polymères (2), en temps que les nanofibres formées (20) sont déportées par l'influence du champ électrique de l'électrode chargée tournante (30) vers la contre-électrode (40) et, après les nanofibres sont déposées sur le moyen (7) pour le placement des nanofibres (20), **caractérisé en ce que** les nanofibres (20) sont formées de la surface d'une électrode chargée (30) de forme cylindrique, ou quadrilatérale prismatique, ou multilatérale prismatique, en temps que la contre-électrode (40) est placée contre la partie libre de la circonférence de l'électrode chargée (30), et l'air entre l'électrode chargée (30) et la contre-électrode (40) est évacué.

2. Procédé selon la revendication 1, **caractérisé en ce que** les nanofibres (20) sont défléchies de leur direction par l'évacuation de l'air dans la direction vers la contre-électrode (40), et elles sont amenées vers le moyen (7) pour le placement des nanofibres (20).

3. Procédé selon l'une quelconque des revendications 1 ou 2, **caractérisé en ce que** dans l'espace entre les électrodes (30, 40) est amené l'air desséchant auxiliaire (9).

4. Procédé selon la revendication 3, **caractérisé en ce qu'** une partie de l'air desséchant auxiliaire (9) est déportée de l'espace devant le moyen (7) pour le placement des nanofibres (20) sans le passage à travers ce moyen (7).

5. Procédé selon l'une quelconque des revendications 3 ou 4, **caractérisé en ce que** l'air desséchant auxiliaire (9) est chauffé devant l'entrée dans l'espace entre les électrodes (30, 40).

6. Procédé selon l'une quelconque des revendications 1 à 6, **caractérisé en ce que** la solution des polymères (2) est formée par la solution aqueuse.

7. Le dispositif pour la production des nanofibres de la solution des polymères (2) à l'aide du filage électrostatique dans le champ électrique formé par la différence des potenciels entre l'électrode chargée tournante (30) et la contre-électrode (40), dans lequel la solution des polymères (2) pour le filage est amenée dans le champ électrique pour le filage à l'aide de la surface de l'électrode chargée tournante (30) qui est par une partie de sa surface plongée dans la solution des polymères (2), en temps que les nanofibres formées (20) sont déportées par l'influence du champ électrique de l'électrode chargée tournante (30) vers la contre-électrode (40) et, après les nanofibres sont déposées sur le moyen (7) pour le placement des nanofibres (20), **caractérisé en ce que** l'électrode chargée (30) est un cylindre ou un prisme quadrilatéral, ou un prisme multilatéral, et contre la partie libre de la circonférence de l'électrode chargée (30) est placée la contre-électrode (40).

8. Le dispositif selon la revendication 7, **caractérisé en ce que** la contre-électrode (40) encercle la partie libre de la circonférence de l'électrode chargée (30) en toute sa longueur.

9. Le dispositif selon la revendication 7 ou 8, **caractérisé en ce qu'** entre les deux électrodes (30, 40) est situé le moyen (7) pour le placement des nanofibres.

10. Le dispositif selon la revendication 9, **caractérisé en ce que** le moyen (7) pour le placement des nanofibres est perméable à l'air, en temps que l'espace derrière ce moyen (7) par rapport à l'électrode chargée (30) est accouplé avec la source (6) de la dépression.

11. Le dispositif selon la revendication 7, **caractérisé en ce qu'** en dehors de l'espace entre les deux électrodes (30, 40) est situé le moyen (7) pour le placement des nanofibres, perméable à l'air, en temps que l'espace derrière ce moyen (7) par rapport à l'électrode chargée (30) est accouplé avec la source (6) de la dépression servant à produire le courant d'air se dirigeant vers ce moyen (7).

12. Le dispositif selon l'une quelconque des revendications 7 à 11, **caractérisé en ce que** le moyen (7) pour le placement des nanofibres est formé par le transporteur (71) perméable à l'air.

13. Le dispositif selon l'une quelconque des revendications 7 à 11, **caractérisé en ce que** le moyen (7) pour le placement des nanofibres est formé par le matériau porteur superficiel des nanofibres (72).

14. Le dispositif selon l'une quelconque des revendications 7 à 13, **caractérisé en ce que** dans l'espace entre les électrodes (30, 40) il y a un orifice de l'entrée (90) d'air desséchant auxiliaire (9).

15. Le dispositif selon la revendication 14, **caractérisé en ce que** dans l'entrée (90) d'air desséchant auxiliaire (9) est placé le dispositif de réchauffement de l'air.

16. Le dispositif selon la revendication 13 ou 15, **caractérisé en ce qu'**au moins une partie de l'air est déportée de l'espace devant le moyen (7) pour le placement des nanofibres par rapport à l'électrode chargée (30) sans le passage à travers ce moyen (7).
